# EUROPEAN PATENT APPLICATION

(11) **EP 4 654 726 A1**
(43) Date of publication of application: **26.11.2025**
(21) Application number: 23916758.8
(22) Date of filing: 18.01.2023
(51) Int. Cl.: H04W 72/30

(54) **CONFIGURATION INFORMATION RECEIVING METHOD, CONFIGURATION INFORMATION SENDING METHOD, SYSTEM, COMMUNICATION APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Hersina, Günter
(86) International application number: PCT/CN2023/073009
(87) International publication number: WO 2024/152275

(57) **Abstract**

The present disclosure relates to the technical field of communications, and in particular to a configuration information receiving method, a configuration information sending method, a system, a communication apparatus, and a storage medium. The configuration information receiving method comprises: determining configuration information of a multicast broadcast service control channel according to a broadcast message and/or dedicated signaling sent by a network device, wherein the multicast broadcast service control channel is used for transmitting a multicast broadcast service configuration. According to the present disclosure, it can be ensured that a terminal in a non-connected state can also successfully obtain a multicast service configuration and then successfully receive a multicast service according to the multicast service configuration in the non-connected state. It can be ensured that only a specific terminal can obtain a multicast service configuration and then successfully receive a multicast service according to the multicast service configuration in a non-connected state.

## Description

### TECHNICAL FIELD

The present disclosure relates to the field of communication technologies, and in particular to a method for receiving configuration information, a method for sending configuration information, an apparatus for receiving configuration information, an apparatus for sending configuration information, a system for determining configuration information, a communication apparatus, and a computer-readable storage medium.

### BACKGROUND

A terminal may receive a multicast service in a connected state. When there is no multicast service data, a network device may switch the terminal to a non-connected state. However, this will cause great restrictions on a communication scenario, because the terminal may only receive the multicast service in the connected state.

### SUMMARY

Embodiments of the present disclosure propose a method for receiving configuration information, a method for sending configuration information, an apparatus for receiving configuration information, an apparatus for sending configuration information, a system for determining configuration information, a communication apparatus and a computer-readable storage medium to solve technical problems in related art.

According to a first aspect of the embodiments of the present disclosure, a method for receiving configuration information is proposed. The method is performed by a terminal, and the method includes: determining configuration information of a multicast broadcast service control channel based on a broadcast message and/or a dedicated signaling sent by a network device, in which the multicast broadcast service control channel is used to transmit a multicast broadcast service configuration.

According to a second aspect of the embodiments of the present disclosure, a method for sending configuration information is proposed. The method is performed by a network device, and the method includes: sending a broadcast message and/or a dedicated signaling, in which the broadcast message and/or the dedicated signaling is used to determine configuration information of a multicast broadcast service control channel, and the multicast broadcast service control channel is used to transmit a multicast broadcast service configuration.

According to a third aspect of the embodiments of the present disclosure, an apparatus for receiving configuration information is proposed. The apparatus includes: a processing module, configured to determine configuration information of a multicast broadcast service control channel based on a broadcast message and/or dedicated signaling sent by a network device, in which the multicast broadcast service control channel is used to transmit a multicast broadcast service configuration.

According to a fourth aspect of the embodiments of the present disclosure, an apparatus for sending configuration information is proposed. The apparatus includes: a sending module, configured to send a broadcast message and/or a dedicated signaling, in which the broadcast messages and/or the dedicated signaling is used to determine configuration information of a multicast broadcast service control channel, and the multicast broadcast service control channel is used to transmit a multicast broadcast service configuration.

According to a fifth aspect of the embodiments of the present disclosure, a system for determining configuration information is proposed. The system includes a terminal and a network device, in which the terminal is configured to implement the above-mentioned method for receiving configuration information, and the network device is configured to implement the above-mentioned method for sending configuration information.

According to a sixth aspect of the embodiments of the present disclosure, a communication apparatus is proposed. The apparatus includes a processor, and a memory for storing a computer program. When the computer program is executed by the processor, the above-mentioned method for receiving configuration information is implemented.

According to a seventh aspect of the embodiments of the present disclosure, a communication apparatus is proposed. The apparatus includes a processor; and a memory for storing a computer program. When the computer program is executed by the processor, the above-mentioned method for sending configuration information is implemented.

According to an eighth aspect of the embodiments of the present disclosure, a computer-readable storage medium is proposed. The storage medium stores a computer program. When the computer program is executed by a processor, the above-mentioned method for receiving configuration information is implemented.

According to a ninth aspect of the embodiments of the present disclosure, a computer-readable storage medium is proposed. The storage medium stores a computer program. When the computer program is executed by a processor, the above-mentioned method for sending configuration information is implemented.

According to the embodiments of the present disclosure, it can be ensured that the terminal in a non-connected state can also successfully obtain the multicast service configuration, and then successfully receive the multicast service according to the multicast service configuration in the non-connected state.

According to the embodiments of the present disclosure, it can be ensured that only specific terminal can obtain the multicast service configuration, and then successfully receive the multicast service according to the multicast service configuration in the non-connected state.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For an ordinary person skilled in the art, other drawings may be obtained based on the drawings without creative work.
FIG. 1 is a schematic flow chart of a method for receiving configuration information according to an embodiment of the present disclosure.
FIG. 2 is a schematic flow chart of another method for receiving configuration information according to an embodiment of the present disclosure.
FIG. 3 is a schematic flow chart of yet another method for receiving configuration information according to an embodiment of the present disclosure.
FIG. 4 is a schematic flow chart of a method for sending configuration information according to an embodiment of the present disclosure.
FIG. 5 is a schematic flowchart of another method for sending configuration information according to an embodiment of the present disclosure.
FIG. 6 is a schematic flowchart of another method for sending configuration information according to an embodiment of the present disclosure.
FIG. 7 is a schematic diagram of an interaction between a terminal and a network device according to an embodiment of the present disclosure.
FIG. 8 is a schematic block diagram of an apparatus for receiving configuration information according to an embodiment of the present disclosure.
FIG. 9 is a schematic block diagram of an apparatus for sending configuration information according to an embodiment of the present disclosure.
FIG. 10 is a schematic block diagram of an apparatus for sending configuration information according to an embodiment of the present disclosure.
FIG. 11 is a schematic block diagram of an apparatus for receiving configuration information according to an embodiment of the present disclosure.

### DETAILED DESCRIPTION

Technical solutions in the embodiments of the present disclosure will be clearly and completely described below in conjunction with the drawings in the embodiments of the present disclosure. Obviously, the described embodiments are only part of the embodiments of the present disclosure, rather than all of the embodiments. Based on the embodiments in the present disclosure, all other embodiments obtained by ordinary skilled in the art without making any creative work shall fall within the scope of protection of the present disclosure.

The terms used in the embodiments of the present disclosure are for the purpose of describing specific embodiments only and are not intended to limit the embodiments of the present disclosure. As used in the embodiments of the present disclosure and the appended claims, the singular forms "a", "an", and "the" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc., may be used to describe various information in the embodiments of the present disclosure, the information should not be limited to these terms. These terms are used only to distinguish information of the same type from one another. For example, without departing from the scope of the embodiments of the present disclosure, first information may also be referred to as second information, and similarly, the second information may also be referred to as the first information. The word "if" as used herein may be interpreted as "when" or "in a case that" or "in response to determining that..." depending on the context.

For the purpose of brevity and ease of understanding, the terms "greater than" or "less than", "higher than" or "lower than" are used herein to characterize size relationships. However, it can be understood by those skilled in the art that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

In an embodiment, the terminal may receive a multicast service in a connected state or in a non-connected state. It should be noted that receiving the multicast service described in the embodiments of the present disclosure includes receiving data of the multicast service.

In an embodiment, the non-connected state includes at least one of: an idle state, or an inactive state. It is understandable that, with the development of communication technologies, the non-connected state may also include other states of the terminal.

In an embodiment, when the terminal is in the connected state, the network device may carry a multicast service configuration via a Radio Resource Control (RRC) signaling, and send the RRC signaling to the terminal.

In an embodiment, the network device may broadcast a multicast broadcast service (MBS) control channel (MCCH), and the MCCH may transmit a resource configuration for receiving a broadcast service.

When the terminal is in the non-connected state, it may receive the MCCH message broadcast by the network device, obtain the resource configuration for receiving the broadcast service from the MCCH message, and then receive the broadcast service according to the resource configuration for receiving the broadcast service. However, there is currently no solution for how the terminal in the non-connected state can obtain a resource configuration for receiving the multicast service.

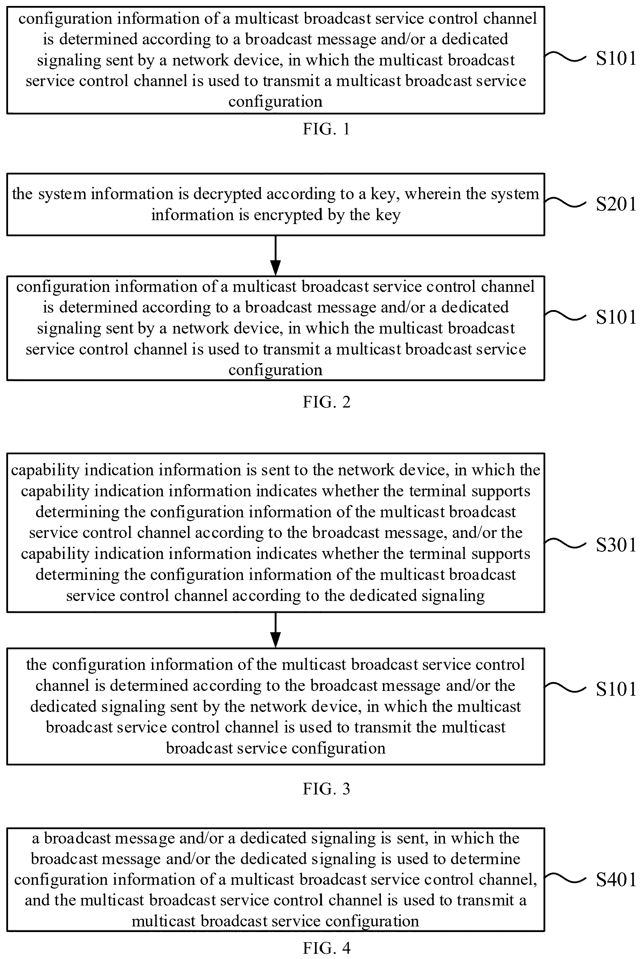

FIG. 1 is a schematic flow chart of a method for receiving configuration information according to an embodiment of the present disclosure. The method for receiving configuration information shown in the embodiment may be performed by a terminal, and the terminal includes but is not limited to a communication apparatus such as a mobile phone, a tablet computer, a wearable device, a sensor, and an Internet of Things device. The terminal may communicate with a network device, including but not limited to a network device in 4G, 5G, 6G and other communication systems, such as a base station, a core network, etc.

As shown in FIG. 1, the method for receiving configuration information may include the following steps.

In step S101, configuration information of a multicast broadcast service control channel is determined according to a broadcast message and/or a dedicated signaling sent by a network device, in which the multicast broadcast service control channel (MCCH) is used to transmit a multicast broadcast service configuration.

In an embodiment, the MCCH includes at least one of:
a multicast service control channel; or
a broadcast service control channel.

In an embodiment, the multicast broadcast service configuration includes at least one of:
a multicast service configuration; or
a broadcast service configuration.

For example, the multicast broadcast service control channel includes the broadcast service control channel, and the multicast broadcast service configuration includes the multicast service configuration. That is, the multicast service configuration may be transmitted through the broadcast service control channel to achieve multiplexing of the broadcast service control channel, which is conducive to improving resource utilization.

In a case that the broadcast service control channel is used to transmit the multicast service configuration, the broadcast service control channel may also be used to transmit the broadcast service configuration.

For example, the multicast broadcast service control channel includes the multicast service control channel, and the multicast broadcast service configuration includes the multicast service configuration. That is, the multicast service configuration is transmitted through the multicast service control channel, making it independent of the broadcast service configuration transmission, which is conducive to reducing the impact on the broadcast service configuration transmission.

The MCCH in the subsequent embodiments may include only the multicast service control channel, or only the broadcast service control channel, or both the multicast service control channel and the broadcast service control channel, which is not specifically limited in the present disclosure.

In an embodiment, the network device may send the broadcast message, in which the broadcast message carries the configuration information of the MCCH, such as a resource configuration for receiving the MCCH. The MCCH may transmit the multicast service configuration, such as a resource configuration for receiving a multicast service.

The terminal may receive the broadcast message sent by the network when it is in the connected state or in the non-connected state. Then, the terminal in the non-connected state may also receive the broadcast message and obtain the configuration information of the MCCH from the broadcast message, and then may receive the MCCH according to the configuration information of the MCCH. After receiving the MCCH, the terminal may obtain the multicast service configuration from the message of the MCCH, so that it may smoothly receive the multicast service according to the multicast service configuration in the non-connected state.

It can be seen that according to this embodiment, it can be ensured that the terminal in the non-connected state can also successfully obtain the multicast service configuration, and then successfully receive the multicast service according to the multicast service configuration in the non-connected state.

In an embodiment, the network device may send the dedicated signaling, and the dedicated signaling carries the configuration information of the MCCH, such as a resource configuration for receiving the MCCH. The MCCH may transmit the multicast service configuration, such as a resource configuration for receiving the multicast service.

Since the network device may send the dedicated signaling to the terminal only after establishing a connection with the terminal, the terminal needs to be in the connected state to receive the dedicated signaling and obtain the configuration information of the MCCH from the dedicated signaling. Therefore, by carrying the configuration information of the MCCH through the dedicated signaling, it can be ensured that only a specific terminal may receive the dedicated signaling and obtain the configuration information of the MCCH carried by the dedicated signaling. Then, the specific terminal may receive the MCCH according to the configuration information of the MCCH, and obtain the multicast service configuration from the message of the MCCH, so as to receive the multicast service according to the multicast service configuration. Accordingly, it can be ensured that only the specific terminal can receive the multicast service.

The specific terminal may also be called an authorized terminal. Which terminal is the specific terminal may be determined autonomously by the network device, determined by a protocol agreement, or determined based on contract information of the terminal. This is not limited in the present disclosure.

It can be seen that according to this embodiment, it can be ensured that only the specific terminal can obtain the multicast service configuration, and then receive the multicast service according to the multicast service configuration in the non-connected state.

The above embodiments describe a case where the configuration information of the MCCH is carried in the broadcast message, and a case where the configuration information of the MCCH is carried in the dedicated signaling. In an embodiment, the configuration information of the MCCH may be carried in the broadcast message and the dedicated signaling.

For example, the configuration information of the MCCH may include a first part of the configuration information and a second part of the configuration information. The network device may carry the first part of the configuration information in the broadcast message and send it, and may carry the second part of the configuration information in the dedicated signaling and send it. The terminal may obtain the first part of the configuration information from the broadcast message, obtain the second part of the configuration information from the dedicated signaling, and then determine the complete configuration information of the MCCH according to the first part of the configuration information and the second part of the configuration information.

In an embodiment, the terminal is a terminal that joins a multicast service session and is configured to be able to receive the multicast service in the non-connected state. For this type of terminal, there is a need to receive the multicast service, so it may receive the configuration information of the MCCH, and then obtain the multicast service configuration from the message of the MCCH, and then receive the multicast service according to the multicast service configuration in the non-connected state.

In an embodiment, the configuration information of the multicast broadcast service control channel includes at least one of:
a common frequency domain resource of the multicast broadcast service control channel;
a repetition period and an offset of the multicast broadcast service control channel (mcch-RepetitionPeriodAndOffset);
a window start slot of the multicast broadcast service control channel (mcch-WindowStartSlot);
a window duration of the multicast broadcast service control channel (mcch-WindowDuration); or
a modification period of the multicast broadcast service control channel.

It should be noted that the configuration information of the MCCH is not limited to the above content and may be increased or reduced as needed.

In an embodiment, the dedicated signaling includes a Radio Resource Control (RRC) signaling. The RRC signaling includes at least one of:
a radio resource control releases (RRCRelease) signaling, in which the RRCRelease signaling may be an RRCRelease signaling carrying a suspend configuration (suspendConfig), or the RRCRelease signaling may be an RRCRelease signaling not carrying the suspend configuration;
a radio resource control reconfiguration (RRCReconfiguration) signaling; or
a radio resource control resume request response signaling, such as a radio resource control resume (RRCResume) signaling.

In an embodiment, the broadcast message includes at least one of:
a paging message (paging); or
a system Information (SI).

In an embodiment, the system information includes at least one of:
an existing system information block (SIB), such as an SIB20; or
a new system information block (New SIB), which may also be referred to as a newly defined system information block.

In an embodiment, the existing SIB may carry the configuration information of the MCCH, but the MCCH received according to the configuration information of the MCCH carried by the existing SIB includes the MCCH used to transmit the broadcast service configuration.

Carrying the configuration information of the MCCH, that carries the multicast service configuration, in the existing SIB can improve the utilization of the communication resource, but the terminal needs to distinguish whether the configuration information of the MCCH is the configuration information of the MCCH used to transmit the broadcast service configuration or the configuration information of the MCCH used to transmit the multicast service configuration.

Therefore, the configuration information of the MCCH used to transmit the multicast service configuration may also be carried in the new SIB and sent. Then the configuration information of the MCCH obtained by the terminal in the new SIB is the configuration information of the MCCH used to transmit the multicast service configuration. The configuration information of the MCCH obtained in the existing SBI is the configuration information of the MCCH used to transmit the broadcast service configuration. This helps to simplify the processing procedure on the terminal.

In an embodiment, the new system information block may be an on-demand system information block. When the terminal needs to obtain the configuration information of the MCCH used to transmit the multicast service configuration, the terminal may send a request to the network device. The network device may not broadcast the new SIB before receiving the request, and may start broadcasting the new SIB after receiving the request.

In an embodiment, configuration information of the system information is carried in at least one of:
a system information block; or
a dedicated signaling.

In an embodiment, when the configuration information of the MCCH is carried in the system information, the terminal needs to determine the configuration information of the system information, such as a resource configuration for receiving the system information, and then receive the system information according to the configuration information of the system information.

The configuration information of the system information may be carried in an SIB, for example, in the system information, for example, in SIB1, or may be carried in the dedicated signaling.

In an embodiment, the configuration information of the system information may be carried in the system information, for example, may be carried in SIB1. The system information may carry a part of the configuration information of the MCCH, or carry all the configuration information of the MCCH. The MCCH is used to transmit the multicast service configuration and/or the broadcast service configuration.

In an embodiment, the configuration information of the system information may be carried in the dedicated signaling. The system information may carry a part of the configuration information of the MCCH, or carry all the configuration information of the MCCH. The MCCH is used to transmit the multicast service configuration and/or the broadcast service configuration.

In an embodiment, the configuration information of the system information may include a first part of the configuration information and a second part of the configuration information, in which the first part of the configuration information may be carried in the dedicated signaling, and the second part of the configuration information may be carried in the system information, for example, in SIB1. The terminal may obtain the first part of the configuration information from the dedicated signaling, and obtain the second part of the configuration information from the system information, for example, from SIB1, and then determine the complete configuration information of the system information according to the first part of the configuration information and the second part of the configuration information. The system information may carry a part of the configuration information of the MCCH, or carry all the configuration information of the MCCH. The MCCH is used to transmit the multicast service configuration and/or the broadcast service configuration.

FIG. 2 is a schematic flow chart of another method for receiving configuration information according to an embodiment of the present disclosure. The method for receiving configuration information may be performed by a terminal. As shown in FIG. 2, the method for receiving configuration information further includes the following step.

In step S201, the system information is decrypted according to a key, in which the system information is encrypted by the key.

It should be noted that the embodiment shown in FIG. 2 may be implemented independently or in combination with at least one other embodiment in the present disclosure. The specific selection can be made as needed, and the present disclosure is not limited thereto.

In an embodiment, before sending the system information carrying the configuration information of the MCCH, the network device may first encrypt the system information using the key, and then may send the encrypted system information.

After receiving the system information, if the terminal does not store the key for decrypting the system information, the terminal cannot decrypt the system information, and thus cannot obtain the configuration information of the MCCH carried in the system information, and cannot receive the multicast service.

After receiving the system information, if the terminal stores the key for decrypting the system information, the system information can be decrypted according to the key, thereby obtaining the configuration information of the MCCH carried by the system information, and then receiving the MCCH according to the configuration information of the MCCH, and obtaining the multicast service configuration from the message of the MCCH, and receiving the multicast service according to the multicast service configuration.

For example, when MCCH is used to transmit the multicast service configuration, it can be ensured that only a specific terminal, such as a terminal storing the key for decrypting the system information, may obtain the configuration information of the MCCH carried in the system information and thus receive the multicast service. For example, when the MCCH is used to transmit the broadcast service configuration, it can be ensured that only a specific terminal, such as a terminal storing the key for decrypting the system information, may obtain the configuration information of the MCCH carried in the system information and thus receive the broadcast service.

In an embodiment, the terminal may determine the key according to a protocol agreement, or may determine the key in advance according to an instruction of the network device.

For example, the terminal determines the key according to the instruction of the network device, and the instruction of the network device includes at least one of: a non-access stratum (NAS) message or a dedicated signaling. In an embodiment, the method further includes: determining the key according to a non-access stratum message and/or a dedicated signaling. Then the terminal may decrypt the system information according to the key.

In an embodiment, the configuration information of the system information includes at least one of:
a resource configuration for receiving the system information;
configuration information of a random access channel for requesting the system information;
whether a cell where the terminal is located supports broadcasting the system information;
a first valid area of the system information;
a valid version number of the system information;
whether the system information is sent in a broadcast mode;
a broadcast period of the system information; or
whether the system information is encrypted.

In an embodiment, the configuration information of the system information sent by the network device may include the resource configuration for receiving the system information. The terminal may determine a resource for receiving the system information according to the resource configuration for receiving the system information, and then receive the system information on the determined resource.

In an embodiment, the terminal sends a request to the network device for requesting the system information for transmitting the configuration information of the MCCH for the multicast service configuration. The request may be carried in a random access channel and sent.

The configuration information of the system information sent by the network device may include the configuration information of the random access channel for requesting the system information. The terminal may send the random access channel to the network device according to the configuration information of the random access channel for requesting the system information, and use the random access channel to transmit the request for requesting the system information, in which the system information requested by the terminal includes the system information for transmitting the configuration information of the MCCH for the multicast service configuration.

In an embodiment, the configuration information of the system information sent by the network device may include whether the cell where the terminal is located supports broadcasting the system information. For example, the configuration information of the system information may specifically indicate whether the cell where the terminal is located supports broadcasting the system information for transmitting the configuration information of the MCCH for the multicast service configuration.

When determining that the cell where the terminal is located supports broadcasting the system information, the terminal may receive the system information and obtain the configuration information of the MCCH from the system information. When determining that the cell where the terminal is located does not support broadcast the system information, the terminal may enter the connected state, receive the RRC signaling in the connected state, and obtain the configuration information of the MCCH from the RRC signaling.

In an embodiment, the configuration information of the system information sent by the network device may include the first valid area of the system information. After the terminal receives the system information and obtains the configuration information of the MCCH from the system information, it may determine whether a current location of the terminal is within the first valid area.

If the terminal is still within the first valid area, the terminal may determine that the configuration information of the MCCH carried by the system information is valid, and then the MCCH may be received according to the configuration information of the MCCH. After receiving the MCCH, the multicast service configuration is obtained from the message of the MCCH, and the multicast service is received according to the multicast service configuration.

If the terminal is not within the first valid area, the terminal may determine that the configuration information of the MCCH carried in the system information is invalid, and then the terminal will not receive the MCCH according to the configuration information of the MCCH obtained from the system information.

In an embodiment, the configuration information of the system information sent by the network device may include the valid version number of the system information. After receiving the system information, the terminal may determine the valid version number of the system information, and may continue to receive system information after receiving the system information, and determine a valid version number of the newly received system information.

If the valid version number of the newly received system information is the same as that of the received system information, the terminal may determine that the received system information is still valid, and then may receive the MCCH according to the configuration information of the MCCH obtained from the system information. After receiving the MCCH, the terminal obtains the multicast service configuration from the message of the MCCH and receives the multicast service according to the multicast service configuration.

If the valid version number of the newly received system information is different from that of the received system information, the terminal may determine that the received system information is invalid, and will not receive the MCCH according to the configuration information of the MCCH obtained from the system information.

In an embodiment, the configuration information of the system information sent by the network device may include whether the system information is sent in a broadcast manner. For example, the configuration information of the system information may specifically indicate whether the system information for transmitting the configuration information of the MCCH for the multicast service configuration is sent in the broadcast manner.

When determining that the system information is sent in the broadcast manner, the terminal may receive the system information and obtain the configuration information of the MCCH from the system information. When determining that the system information is not sent in the broadcast manner, the terminal may send the request to the network device to request the system information.

In an embodiment, the configuration information of the system information sent by the network device may include the broadcast period of the system information. The terminal may receive the system information according to the broadcast period.

In an embodiment, the configuration information of the system information sent by the network device may include whether the system information is encrypted.

When determining that the system information is encrypted, the terminal may decrypt the system information using the stored key, and then decode the decrypted system information. When the terminal determines that the system information is not encrypted, it is not needed to decrypt the system information, and the terminal may directly decode the system information.

In an embodiment, the configuration information of the multicast broadcast service control channel is associated with at least one of:
a multicast broadcast service identity;
a second valid area; or
a valid duration.

In an embodiment, the multicast broadcast service identity may include only the multicast service identity, or only the broadcast service identity, or both the multicast service identity and the broadcast service identity. The following embodiments mainly illustrate the present disclosure in the case where the multicast broadcast service identity includes the multicast service identity.

In an embodiment, the configuration information of the MCCH may be associated with the multicast broadcast service identity, in which the multicast broadcast service identity includes at least one multicast service identity, and the multicast service identity may be a Temporary Mobile Group Identity (TMGI).

The network device may determine the multicast broadcast service identity of the multicast service corresponding to the multicast service configuration transmitted by the MCCH, and then associate the multicast broadcast service identity with the configuration information of the MCCH.

After receiving the MCCH according to the configuration information of the MCCH, the terminal may determine the multicast service corresponding to the multicast service configuration transmitted by the MCCH according to the multicast broadcast service identity associated with the configuration information of the MCCH.

For example, the multicast broadcast service identity associated with the configuration information of the MCCH is TMGI#1. After receiving the MCCH according to the configuration information of the MCCH, the terminal may determine, according to TMGI#1 associated with the configuration information of the MCCH, that the multicast service configuration transmitted by the MCCH is used to receive the multicast service identified as TMGI#1. After obtaining the multicast service configuration from the message of the MCCH, the multicast service identified as TMGI#1 may be received according to the multicast service configuration. Accordingly, it can be ensured that the multicast service corresponding to the multicast broadcast service identity that is associated with the configuration information of the MCCH is accurately received, thereby avoiding the reception of erroneous multicast service.

In an embodiment, the configuration information of the MCCH may be associated with the second valid area.

If the terminal is currently in the first valid area, the terminal may determine that the configuration information of the MCCH is valid, and then the MCCH may be received according to the configuration information of the MCCH. After receiving the MCCH, the multicast service configuration is obtained from the message of the MCCH, and the multicast service is received according to the multicast service configuration.

If the terminal is not currently within the first valid area, the terminal may determine that the configuration information of the MCCH is invalid, and will not receive the MCCH according to the configuration information of the MCCH.

In an embodiment, the configuration information of the MCCH may be associated with the valid duration.

The terminal may start timing from a timing it receives the configuration information of the MCCH. When a timing duration is less than or equal to the valid duration, the terminal may determine that the configuration information of the MCCH is valid, and then it may receive the MCCH according to the configuration information of the MCCH. After receiving the MCCH, it obtains the multicast service configuration from the MCCH message and receives the multicast service according to the multicast service configuration.

The terminal may start timing from a timing it receives the configuration information of the MCCH. When the timing duration is greater than the valid duration, the terminal may determine that the configuration information of the MCCH is invalid, and will not receive the MCCH according to the configuration information of the MCCH.

In an embodiment, the second valid area includes at least one of:
a cell;
a radio access network (RAN) notification area (RNA);
a Tracking Area (TA); or
a Registration Area (RA).

FIG. 3 is a schematic flow chart of another method for receiving configuration information according to an embodiment of the present disclosure. The method for receiving configuration information may be performed by a terminal. As shown in FIG. 3, the method for receiving configuration information further includes the following step.

In step S301, capability indication information is sent to the network device.

The capability indication information indicates whether the terminal supports determining the configuration information of the multicast broadcast service control channel according to the broadcast message, and/or the capability indication information indicates whether the terminal supports determining the configuration information of the multicast broadcast service control channel according to the dedicated signaling.

It should be noted that the embodiment shown in FIG. 3 may be implemented independently or in combination with at least one other embodiment in the present disclosure. The specific selection may be made as required and the present disclosure is not limited thereto.

In an embodiment, the terminal may send the capability indication information to the network device, in which the capability indication information indicates whether the terminal supports determining the configuration information of the MCCH according to the broadcast message.

The network device may determine, based on the capability indication information, whether the terminal supports determining the configuration information of the MCCH according to the broadcast message.

For example, when the network device determines that the terminal supports determining the configuration information of the MCCH according to the broadcast message, the configuration information of the MCCH may be carried in the broadcast message.

For example, when the network device determines that the terminal does not support determining the configuration information of the MCCH according to the broadcast message, the configuration information of the MCCH may not be carried in the broadcast message. Instead, the configuration information of the MCCH is sent to the terminal through the dedicated signaling.

In an embodiment, the terminal may send the capability indication information to the network device, in which the capability indication information indicates whether the terminal supports determining the configuration information of the MCCH according to the dedicated signaling.

The network device may determine, based on the capability indication information, whether the terminal supports determining the configuration information of the MCCH according to the broadcast message.

For example, when the network device determines that the terminal supports determining the configuration information of the MCCH according to the dedicated signaling, the network device may carry the configuration information of the MCCH in the dedicated signaling.

For example, when the network device determines that the terminal does not support determining the configuration information of the MCCH according to the dedicated signaling, the network device may carry the configuration information of the MCCH in the broadcast message instead of sending the configuration information of the MCCH to the terminal through the dedicated signaling.

FIG. 4 is a schematic flow chart of a method for sending configuration information according to an embodiment of the present disclosure. The method for sending configuration information shown in this embodiment can be performed by a network device. The network device may communicate with a terminal. The network device includes but is not limited to a base station in a communication system, such as a 4G base station, a 5G base station, and a 6G base station, and the terminal includes but is not limited to a mobile phone, a tablet computer, a wearable device, a sensor, an Internet of Things device, and other communication apparatus.

As shown in FIG. 4, the method for sending configuration information may include the following steps.

In step S401, a broadcast message and/or a dedicated signaling is sent, in which the broadcast message and/or the dedicated signaling is used to determine configuration information of a multicast broadcast service control channel (MCCH), and the MCCH is used to transmit a multicast broadcast service configuration.

In an embodiment, the MCCH includes at least one of:
a multicast service control channel; or
a broadcast service control channel.

In an embodiment, the multicast broadcast service configuration includes at least one of:
a multicast service configuration; or
a broadcast service configuration.

For example, the multicast broadcast service control channel includes the broadcast service control channel, and the multicast broadcast service configuration includes the multicast service configuration. That is, the multicast service configuration may be transmitted through the broadcast service control channel to achieve multiplexing of the broadcast service control channel, which is conducive to improving resource utilization.

In a case that the broadcast service control channel is used to transmit the multicast service configuration, the broadcast service control channel may also be used to transmit the broadcast service configuration.

For example, the multicast broadcast service control channel includes the multicast service control channel, and the multicast broadcast service configuration includes the multicast service configuration. That is, the multicast service configuration is transmitted through the multicast service control channel, making it independent of the broadcast service configuration transmission, which is conducive to reducing the impact on the broadcast service configuration transmission.

The MCCH in the subsequent embodiments may include only the multicast service control channel, or only the broadcast service control channel, or both the multicast service control channel and the broadcast service control channel, which is not specifically limited in the present disclosure.

In an embodiment, the network device may send the broadcast message, in which the broadcast message carries the configuration information of the MCCH, such as a resource configuration for receiving the MCCH. The MCCH may transmit the multicast service configuration, such as a resource configuration for receiving a multicast service.

The terminal may receive the broadcast message sent by the network when it is in the connected state or in the non-connected state. Then, the terminal in the non-connected state may also receive the broadcast message and obtain the configuration information of the MCCH from the broadcast message, and then may receive the MCCH according to the configuration information of the MCCH. After receiving the MCCH, the terminal may obtain the multicast service configuration from the message of the MCCH, so that it may smoothly receive the multicast service according to the multicast service configuration in the non-connected state.

It can be seen that according to this embodiment, it can be ensured that the terminal in the non-connected state can also successfully obtain the multicast service configuration, and then successfully receive the multicast service according to the multicast service configuration in the non-connected state.

In an embodiment, the network device may send the dedicated signaling, and the dedicated signaling carries the configuration information of the MCCH, such as a resource configuration for receiving the MCCH. The MCCH may transmit the multicast service configuration, such as a resource configuration for receiving the multicast service.

Since the network device may send the dedicated signaling to the terminal only after establishing a connection with the terminal, the terminal needs to be in the connected state to receive the dedicated signaling and obtain the configuration information of the MCCH from the dedicated signaling. Therefore, by carrying the configuration information of the MCCH through the dedicated signaling, it can be ensured that only a specific terminal may receive the dedicated signaling and obtain the configuration information of the MCCH carried by the dedicated signaling. Then, the specific terminal may receive the MCCH according to the configuration information of the MCCH, and obtain the multicast service configuration from the message of the MCCH, so as to receive the multicast service according to the multicast service configuration. Accordingly, it can be ensured that only the specific terminal can receive the multicast service.

The specific terminal may also be called an authorized terminal. Which terminal is the specific terminal may be determined autonomously by the network device, determined by a protocol agreement, or determined based on contract information of the terminal. This is not limited in the present disclosure.

It can be seen that according to this embodiment, it can be ensured that only the specific terminal can obtain the multicast service configuration, and then receive the multicast service according to the multicast service configuration in the non-connected state.

The above embodiments describe a case where the configuration information of the MCCH is carried in the broadcast message, and a case where the configuration information of the MCCH is carried in the dedicated signaling. In an embodiment, the configuration information of the MCCH may be carried in the broadcast message and the dedicated signaling.

For example, the configuration information of the MCCH may include a first part of the configuration information and a second part of the configuration information. The network device may carry the first part of the configuration information in the broadcast message and send it, and may carry the second part of the configuration information in the dedicated signaling and send it. The terminal may obtain the first part of the configuration information from the broadcast message, obtain the second part of the configuration information from the dedicated signaling, and then determine the complete configuration information of the MCCH according to the first part of the configuration information and the second part of the configuration information.

In an embodiment, the terminal is a terminal that joins a multicast service session and is configured to be able to receive the multicast service in the non-connected state. For this type of terminal, there is a need to receive the multicast service, so it may receive the configuration information of the MCCH, and then obtain the multicast service configuration from the message of the MCCH, and then receive the multicast service according to the multicast service configuration in the non-connected state.

In an embodiment, the configuration information of the multicast broadcast service control channel includes at least one of:
a common frequency domain resource of the multicast broadcast service control channel;
a repetition period and an offset of the multicast broadcast service control channel (mcch-RepetitionPeriodAndOffset);
a window start slot of the multicast broadcast service control channel (mcch-WindowStartSlot);
a window duration of the multicast broadcast service control channel (mcch-WindowDuration); or
a modification period of the multicast broadcast service control channel.

It should be noted that the configuration information of the MCCH is not limited to the above content and may be increased or reduced as needed.

In an embodiment, the dedicated signaling includes a Radio Resource Control (RRC) signaling. The RRC signaling includes at least one of:
a radio resource control releases (RRCRelease) signaling, in which the RRCRelease signaling may be an RRCRelease signaling carrying a suspend configuration (suspendConfig), or the RRCRelease signaling may be an RRCRelease signaling not carrying the suspend configuration;
a radio resource control reconfiguration (RRCReconfiguration) signaling; or
a radio resource control resume request response signaling, such as a radio resource control resume (RRCResume) signaling.

In an embodiment, the broadcast message includes at least one of:
a paging message (paging); or
a system Information (SI).

In an embodiment, the system information includes at least one of:
an existing system information block (SIB), such as an SIB20; or
a new system information block (New SIB), which may also be referred to as a newly defined system information block.

In an embodiment, the existing SIB may carry the configuration information of the MCCH, but the MCCH received according to the configuration information of the MCCH carried by the existing SIB includes the MCCH used to transmit the broadcast service configuration.

Carrying the configuration information of the MCCH, that carries the multicast service configuration, in the existing SIB can improve the utilization of the communication resource, but the terminal needs to distinguish whether the configuration information of the MCCH is the configuration information of the MCCH used to transmit the broadcast service configuration or the configuration information of the MCCH used to transmit the multicast service configuration.

Therefore, the configuration information of the MCCH used to transmit the multicast service configuration may also be carried in the new SIB and sent. Then the configuration information of the MCCH obtained by the terminal in the new SIB is the configuration information of the MCCH used to transmit the multicast service configuration. The configuration information of the MCCH obtained in the existing SBI is the configuration information of the MCCH used to transmit the broadcast service configuration. This helps to simplify the processing procedure on the terminal.

In an embodiment, the new system information block may be an on-demand system information block. When the terminal needs to obtain the configuration information of the MCCH used to transmit the multicast service configuration, the terminal may send a request to the network device. The network device may not broadcast the new SIB before receiving the request, and may start broadcasting the new SIB after receiving the request.

In an embodiment, configuration information of the system information is carried in at least one of:
a system information block; or
a dedicated signaling.

In an embodiment, when the configuration information of the MCCH is carried in the system information, the terminal needs to determine the configuration information of the system information, such as a resource configuration for receiving the system information, and then receive the system information according to the configuration information of the system information.

The configuration information of the system information may be carried in an SIB, for example, in the system information, for example, in SIB1, or may be carried in the dedicated signaling.

In an embodiment, the configuration information of the system information may be carried in the system information, for example, may be carried in SIB1. The system information may carry a part of the configuration information of the MCCH, or carry all the configuration information of the MCCH. The MCCH is used to transmit the multicast service configuration and/or the broadcast service configuration.

In an embodiment, the configuration information of the system information may be carried in the dedicated signaling. The system information may carry a part of the configuration information of the MCCH, or carry all the configuration information of the MCCH. The MCCH is used to transmit the multicast service configuration and/or the broadcast service configuration.

In an embodiment, the configuration information of the system information may include a first part of the configuration information and a second part of the configuration information, in which the first part of the configuration information may be carried in the dedicated signaling, and the second part of the configuration information may be carried in the system information, for example, in SIB1. The terminal may obtain the first part of the configuration information from the dedicated signaling, and obtain the second part of the configuration information from the system information, for example, from SIB1, and then determine the complete configuration information of the system information according to the first part of the configuration information and the second part of the configuration information. The system information may carry a part of the configuration information of the MCCH, or carry all the configuration information of the MCCH. The MCCH is used to transmit the multicast service configuration and/or the broadcast service configuration.

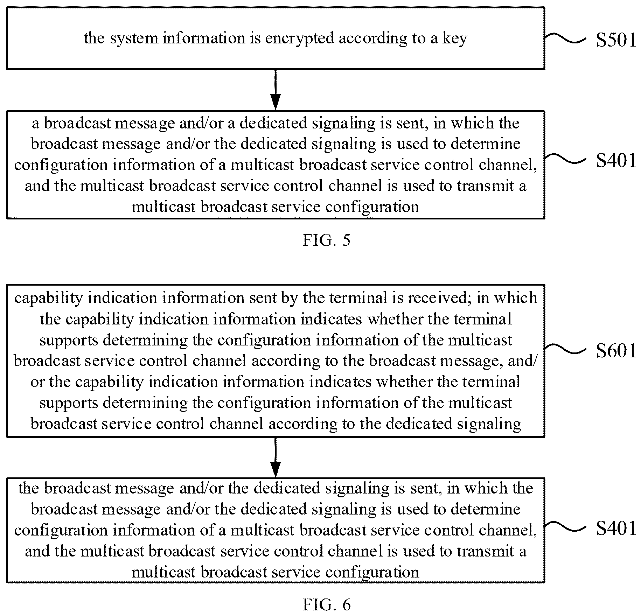

FIG. 5 is a schematic flow chart of another method for sending configuration information according to an embodiment of the present disclosure. The method for sending configuration information may be performed by a network device. As shown in FIG. 5, the method for sending configuration information further includes the following step.

In step S501, the system information is encrypted according to a key.

It should be noted that the embodiment shown in FIG. 5 may be implemented independently or in combination with at least one other embodiment in the present disclosure. The specific selection can be made as needed, and the present disclosure is not limited thereto.

In an embodiment, before sending the system information carrying the configuration information of the MCCH, the network device may first encrypt the system information using the key, and then may send the encrypted system information.

After receiving the system information, if the terminal does not store the key for decrypting the system information, the terminal cannot decrypt the system information, and thus cannot obtain the configuration information of the MCCH carried in the system information, and cannot receive the multicast service.

After receiving the system information, if the terminal stores the key for decrypting the system information, the system information can be decrypted according to the key, thereby obtaining the configuration information of the MCCH carried by the system information, and then receiving the MCCH according to the configuration information of the MCCH, and obtaining the multicast service configuration from the message of the MCCH, and receiving the multicast service according to the multicast service configuration.

For example, when MCCH is used to transmit the multicast service configuration, it can be ensured that only a specific terminal, such as a terminal storing the key for decrypting the system information, may obtain the configuration information of the MCCH carried in the system information and thus receive the multicast service. For example, when the MCCH is used to transmit the broadcast service configuration, it can be ensured that only a specific terminal, such as a terminal storing the key for decrypting the system information, may obtain the configuration information of the MCCH carried in the system information and thus receive the broadcast service.

In an embodiment, the key may be determined according to a protocol agreement, or may be determined in advance by the network device and then indicated to the terminal.

In an embodiment, the method for sending configuration information further includes: sending a non-access stratum message and/or a dedicated signaling to the terminal, in which the non-access stratum message and/or the dedicated signaling indicates the key.

When the network device determines the key, the network device may carry the key and send it to the terminal via the NAS message and/or the dedicated signaling. When the terminal subsequently receives the system information, it may decrypt the system information according to the key.

In an embodiment, the configuration information of the system information includes at least one of:
a resource configuration for receiving the system information;
configuration information of a random access channel for requesting the system information;
whether a cell where the terminal is located supports broadcasting the system information;
a first valid area of the system information;
a valid version number of the system information;
whether the system information is sent in a broadcast mode;
a broadcast period of the system information; or
whether the system information is encrypted.

In an embodiment, the configuration information of the system information sent by the network device may include the resource configuration for receiving the system information. The terminal may determine a resource for receiving the system information according to the resource configuration for receiving the system information, and then receive the system information on the determined resource.

In an embodiment, the terminal sends a request to the network device for requesting the system information for transmitting the configuration information of the MCCH for the multicast service configuration. The request may be carried in a random access channel and sent.

The configuration information of the system information sent by the network device may include the configuration information of the random access channel for requesting the system information. The terminal may send the random access channel to the network device according to the configuration information of the random access channel for requesting the system information, and use the random access channel to transmit the request for requesting the system information, in which the system information requested by the terminal includes the system information for transmitting the configuration information of the MCCH for the multicast service configuration.

In an embodiment, the configuration information of the system information sent by the network device may include whether the cell where the terminal is located supports broadcasting the system information. For example, the configuration information of the system information may specifically indicate whether the cell where the terminal is located supports broadcasting the system information for transmitting the configuration information of the MCCH for the multicast service configuration.

When determining that the cell where the terminal is located supports broadcasting the system information, the terminal may receive the system information and obtain the configuration information of the MCCH from the system information. When determining that the cell where the terminal is located does not support broadcast the system information, the terminal may enter the connected state, receive the RRC signaling in the connected state, and obtain the configuration information of the MCCH from the RRC signaling.

In an embodiment, the configuration information of the system information sent by the network device may include the first valid area of the system information. After the terminal receives the system information and obtains the configuration information of the MCCH from the system information, it may determine whether a current location of the terminal is within the first valid area.

If the terminal is still within the first valid area, the terminal may determine that the configuration information of the MCCH carried by the system information is valid, and then the MCCH may be received according to the configuration information of the MCCH. After receiving the MCCH, the multicast service configuration is obtained from the message of the MCCH, and the multicast service is received according to the multicast service configuration.

If the terminal is not within the first valid area, the terminal may determine that the configuration information of the MCCH carried in the system information is invalid, and then the terminal will not receive the MCCH according to the configuration information of the MCCH obtained from the system information.

In an embodiment, the configuration information of the system information sent by the network device may include the valid version number of the system information. After receiving the system information, the terminal may determine the valid version number of the system information, and may continue to receive system information after receiving the system information, and determine a valid version number of the newly received system information.

If the valid version number of the newly received system information is the same as that of the received system information, the terminal may determine that the received system information is still valid, and then may receive the MCCH according to the configuration information of the MCCH obtained from the system information. After receiving the MCCH, the terminal obtains the multicast service configuration from the message of the MCCH and receives the multicast service according to the multicast service configuration.

If the valid version number of the newly received system information is different from that of the received system information, the terminal may determine that the received system information is invalid, and will not receive the MCCH according to the configuration information of the MCCH obtained from the system information.

In an embodiment, the configuration information of the system information sent by the network device may include whether the system information is sent in a broadcast manner. For example, the configuration information of the system information may specifically indicate whether the system information for transmitting the configuration information of the MCCH for the multicast service configuration is sent in the broadcast manner.

When determining that the system information is sent in the broadcast manner, the terminal may receive the system information and obtain the configuration information of the MCCH from the system information. When determining that the system information is not sent in the broadcast manner, the terminal may send the request to the network device to request the system information.

In an embodiment, the configuration information of the system information sent by the network device may include the broadcast period of the system information. The terminal may receive the system information according to the broadcast period.

In an embodiment, the configuration information of the system information sent by the network device may include whether the system information is encrypted.

When determining that the system information is encrypted, the terminal may decrypt the system information using the stored key, and then decode the decrypted system information. When the terminal determines that the system information is not encrypted, it is not needed to decrypt the system information, and the terminal may directly decode the system information.

In an embodiment, the configuration information of the multicast broadcast service control channel is associated with at least one of: a multicast broadcast service identity; a second valid area; or a valid duration.

In an embodiment, the multicast broadcast service identity may include only the multicast service identity, or only the broadcast service identity, or both the multicast service identity and the broadcast service identity. The following embodiments mainly illustrate the present disclosure in the case where the multicast broadcast service identity includes the multicast service identity.

In an embodiment, the configuration information of the MCCH may be associated with the multicast broadcast service identity, in which the multicast broadcast service identity includes at least one multicast service identity, and the multicast service identity may be a Temporary Mobile Group Identity (TMGI).

The network device may determine the multicast broadcast service identity of the multicast service corresponding to the multicast service configuration transmitted by the MCCH, and then associate the multicast broadcast service identity with the configuration information of the MCCH.

After receiving the MCCH according to the configuration information of the MCCH, the terminal may determine the multicast service corresponding to the multicast service configuration transmitted by the MCCH according to the multicast broadcast service identity associated with the configuration information of the MCCH.

For example, the multicast broadcast service identity associated with the configuration information of the MCCH is TMGI#1. After receiving the MCCH according to the configuration information of the MCCH, the terminal may determine, according to TMGI#1 associated with the configuration information of the MCCH, that the multicast service configuration transmitted by the MCCH is used to receive the multicast service identified as TMGI#1. After obtaining the multicast service configuration from the message of the MCCH, the multicast service identified as TMGI#1 may be received according to the multicast service configuration. Accordingly, it can be ensured that the multicast service corresponding to the multicast broadcast service identity that is associated with the configuration information of the MCCH is accurately received, thereby avoiding the reception of erroneous multicast service.

In an embodiment, the configuration information of the MCCH may be associated with the second valid area.

If the terminal is currently in the first valid area, the terminal may determine that the configuration information of the MCCH is valid, and then the MCCH may be received according to the configuration information of the MCCH. After receiving the MCCH, the multicast service configuration is obtained from the message of the MCCH, and the multicast service is received according to the multicast service configuration.

If the terminal is not currently within the first valid area, the terminal may determine that the configuration information of the MCCH is invalid, and will not receive the MCCH according to the configuration information of the MCCH.

In an embodiment, the configuration information of the MCCH may be associated with the valid duration.

The terminal may start timing from a timing it receives the configuration information of the MCCH. When a timing duration is less than or equal to the valid duration, the terminal may determine that the configuration information of the MCCH is valid, and then it may receive the MCCH according to the configuration information of the MCCH. After receiving the MCCH, it obtains the multicast service configuration from the MCCH message and receives the multicast service according to the multicast service configuration.

The terminal may start timing from a timing it receives the configuration information of the MCCH. When the timing duration is greater than the valid duration, the terminal may determine that the configuration information of the MCCH is invalid, and will not receive the MCCH according to the configuration information of the MCCH.

In an embodiment, the second valid area includes at least one of:
a cell;
a radio access network (RAN) notification area (RNA);
a Tracking Area (TA); or
a Registration Area (RA).

FIG. 6 is a schematic flow chart of another method for sending configuration information according to an embodiment of the present disclosure. The method for sending configuration information may be performed by a network device. As shown in FIG. 6, the method for sending configuration information further includes the following step.

In step S601, capability indication information sent by the terminal is received. The capability indication information indicates whether the terminal supports determining the configuration information of the multicast broadcast service control channel according to the broadcast message, and/or the capability indication information indicates whether the terminal supports determining the configuration information of the multicast broadcast service control channel according to the dedicated signaling.

It should be noted that the embodiment shown in FIG. 6 may be implemented independently or in combination with at least one other embodiment in the present disclosure. The specific selection may be made as required and the present disclosure is not limited thereto.

In an embodiment, the terminal may send the capability indication information to the network device, in which the capability indication information indicates whether the terminal supports determining the configuration information of the MCCH according to the broadcast message.

The network device may determine, based on the capability indication information, whether the terminal supports determining the configuration information of the MCCH according to the broadcast message.

For example, when the network device determines that the terminal supports determining the configuration information of the MCCH according to the broadcast message, the configuration information of the MCCH may be carried in the broadcast message.

For example, when the network device determines that the terminal does not support determining the configuration information of the MCCH according to the broadcast message, the configuration information of the MCCH may not be carried in the broadcast message. Instead, the configuration information of the MCCH is sent to the terminal through the dedicated signaling.

In an embodiment, the terminal may send the capability indication information to the network device, in which the capability indication information indicates whether the terminal supports determining the configuration information of the MCCH according to the dedicated signaling.

The network device may determine, based on the capability indication information, whether the terminal supports determining the configuration information of the MCCH according to the broadcast message.

For example, when the network device determines that the terminal supports determining the configuration information of the MCCH according to the dedicated signaling, the network device may carry the configuration information of the MCCH in the dedicated signaling.

For example, when the network device determines that the terminal does not support determining the configuration information of the MCCH according to the dedicated signaling, the network device may carry the configuration information of the MCCH in the broadcast message instead of sending the configuration information of the MCCH to the terminal through the dedicated signaling.

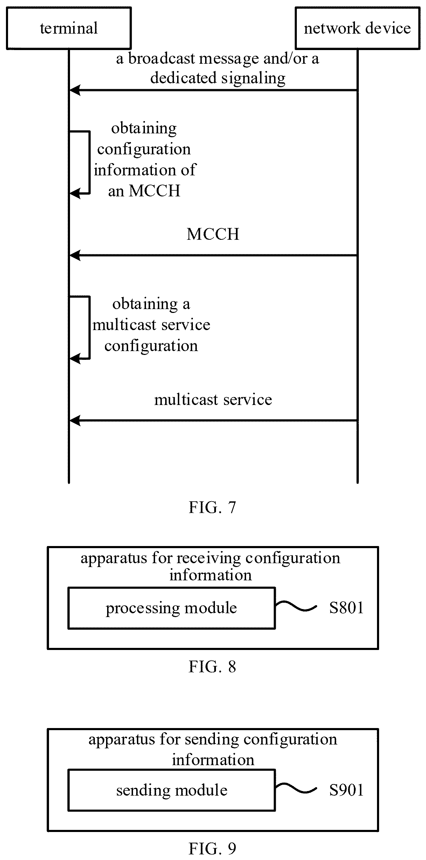

FIG. 7 is a schematic diagram showing an interaction between a terminal and a network device according to an embodiment of the present disclosure.

As shown in FIG. 7, the network device may send a broadcast message and/or a dedicated signaling, in which the broadcast message and/or the dedicated signaling carries configuration information of an MCCH, and the MCCH is used to transmit a multicast service configuration.

The terminal may obtain the configuration information of the MCCH from the broadcast message and/or the dedicated signaling, and then receive the MCCH sent by the network device according to the configuration information of the MCCH, and obtain the multicast service configuration from the message of the MCCH, and then receive the multicast service according to the multicast service configuration.

In an embodiment, the network device may send the broadcast message, in which the broadcast message carries the configuration information of the MCCH, such as a resource configuration for receiving the MCCH. The MCCH may transmit the multicast service configuration, such as a resource configuration for receiving the multicast service.

Since the broadcast message is sent in a broadcast manner, the terminal may receive the broadcast message sent by the network when it is in a connected state or in a non-connected state. Therefore, for the terminal in a non-connected state, it may also receive the broadcast message and obtain the configuration information of the MCCH from the broadcast message, and then may receive the MCCH according to the configuration information of the MCCH. After receiving the MCCH, the terminal may obtain the multicast service configuration from the message of the MCCH, so that it may smoothly receive the multicast service according to the multicast service configuration in the non-connected state.

In an embodiment, the network device may send the dedicated signaling, and the dedicated signaling carries the configuration information of the MCCH, such as the resource configuration for receiving the MCCH. The MCCH may transmit the multicast service configuration, such as the resource configuration for receiving the multicast service.

Since the dedicated signaling is sent in the connected state, the terminal needs to receive the dedicated signaling in the connected state, and therefore the dedicated signaling is sent to a specific terminal, and terminals other than the specific terminal cannot receive the dedicated signaling. Therefore, by carrying the configuration information of the MCCH through the dedicated signaling, it can be ensured that only the specific terminal can receive the dedicated signaling and obtain the configuration information of the MCCH carried by the dedicated signaling, and then receive the MCCH according to the configuration information of the MCCH, and obtain the multicast service configuration from the message of the MCCH, so as to receive the multicast service according to the multicast service configuration. Accordingly, it can be ensured that only the specific terminal can receive the multicast service.

In an embodiment, when the configuration information of the MCCH is carried in the system information, the network device may encrypt the system information by using a key, and then send the encrypted system information.

After receiving the system information, if the terminal stores the key for decrypting the system information, the system information may be decrypted according to the key, thereby obtaining the configuration information of the MCCH carried by the system information, and then receiving the MCCH according to the configuration information of the MCCH, and obtaining the multicast service configuration from the message of the MCCH, and receiving the multicast service according to the multicast service configuration. If the terminal does not store the key for decrypting the system information, the system information cannot be decrypted, and thus the configuration information of the MCCH carried in the system information cannot be obtained, and the multicast service cannot be received.

For example, when MCCH is used to transmit the multicast service configuration, it can be ensured that only the specific terminal, such as the terminal storing the key for decrypting the system information, may obtain the configuration information of the MCCH carried in the system information and thus may receive the multicast service.

In an embodiment, the terminal may send capability indication information to the network device, in which the capability indication information indicates whether the terminal supports determining the configuration information of the MCCH according to the broadcast message.

The network device may determine, based on the capability indication information, whether the terminal supports determining the configuration information of the MCCH according to the broadcast message.

For example, when the network device determines that the terminal supports determining the configuration information of the MCCH according to the broadcast message, the configuration information of the MCCH may be carried in the broadcast message.

For example, when the network device determines that the terminal does not support determining the configuration information of the MCCH according to the broadcast message, the configuration information of the MCCH may not be carried in the broadcast message. Instead, the configuration information of the MCCH is sent to the terminal through the dedicated signaling.

In an embodiment, the terminal may send the capability indication information to the network device, in which the capability indication information indicates whether the terminal supports determining the configuration information of the MCCH according to the dedicated signaling.

The network device may determine, based on the capability indication information, whether the terminal supports determining the configuration information of the MCCH according to the broadcast message.

For example, when the network device determines that the terminal supports determining the configuration information of the MCCH based on the dedicated signaling, the configuration information of the MCCH may be carried in the dedicated signaling.

For example, when the network device determines that the terminal does not support determining the configuration information of the MCCH according to the dedicated signaling, the network device may carry the configuration information of the MCCH in the broadcast message instead of sending the configuration information of the MCCH to the terminal through the dedicated signaling.

It should be noted that for other contents involved in this embodiment, please refer to the description of the relevant contents in the previous embodiments, which will not be repeated here.

Corresponding to the aforementioned embodiments of the methods for receiving configuration information and the methods for sending configuration information, the present disclosure also provides embodiments of an apparatus for receiving configuration information and an apparatus for sending configuration information.

FIG. 8 is a schematic block diagram of an apparatus for receiving configuration information according to an embodiment of the present disclosure. As shown in FIG. 8, the apparatus for receiving configuration information includes:
a processing module 801, configured to determine configuration information of a multicast broadcast service control channel according to a broadcast message and/or a dedicated signaling sent by a network device, in which the multicast broadcast service control channel is used to transmit a multicast broadcast service configuration.

In an embodiment, the broadcast message includes at least one of: a paging message; or system information.

In an embodiment, the system information includes at least one of: an existing system information block; or a new system information block.

In an embodiment, the new system information block includes an on-demand system information block.

In an embodiment, the configuration information of the system information is carried in at least one of: a system information block; or a dedicated signaling.

In an embodiment, the processing module is further configured to decrypt the system information according to a key, in which the system information is encrypted by the key.

In an embodiment, the processing module is further configured to determine the key according to a non-access stratum message and/or a dedicated signaling.

In an embodiment, the configuration information of the system information includes at least one of: a resource configuration for receiving the system information; configuration information of a random access channel for requesting the system information; whether a cell where the terminal is located supports broadcasting the system information; a first valid area of the system information; a valid version number of the system information; whether the system information is sent in a broadcast manner; a broadcast period of the system information; or whether the system information is encrypted.

In an embodiment, the configuration information of the multicast broadcast service control channel is associated with at least one of: a multicast broadcast service identity; a second valid area; or a valid duration.

In an embodiment, the second valid area includes at least one of: a cell; a radio access network notification area; a tracking area; a registration area.

In an embodiment, the configuration information of the multicast broadcast service control channel includes at least one of:
a common frequency domain resource of the multicast broadcast service control channel;
a repetition period and an offset of the multicast broadcast service control channel;
a window start slot of the multicast broadcast service control channel;
a window duration of the multicast broadcast service control channel; or
a modification period of the multicast broadcast service control channel

In an embodiment, the apparatus also includes: a sending module, configured to send capability indication information to the network device; in which the capability indication information indicates whether the terminal supports determining the configuration information of the multicast broadcast service control channel according to the broadcast message, and/or the capability indication information indicates whether the terminal supports determining the configuration information of the multicast broadcast service control channel according to the dedicated signaling.

FIG. 9 is a schematic block diagram of an apparatus for sending configuration information according to an embodiment of the present disclosure. As shown in FIG. 9, the apparatus for sending configuration information includes:
a sending module 901, configured to send a broadcast message and/or a dedicated signaling, in which the broadcast message and/or the dedicated signaling is used to determine configuration information of a multicast broadcast service control channel, and the multicast broadcast service control channel is used to transmit a multicast broadcast service configuration.

In an embodiment, the broadcast message includes at least one of: a paging message; or system information.

In an embodiment, the system information includes at least one of: an existing system information block; or a new system information block.

In an embodiment, the new system information block includes an on-demand system information block.

In an embodiment, the configuration information of the system information is carried in at least one of: a system information block; or a dedicated signaling.

In an embodiment, the apparatus further includes: a processing module, configured to encrypt the system information according to a key.

In an embodiment, the sending module is further configured to send a non-access stratum message and/or a dedicated signaling to a terminal, in which the non-access stratum message and/or the dedicated signaling indicates the key.

In an embodiment, the configuration information of the system information includes at least one of: a resource configuration for receiving the system information; configuration information of a random access channel for requesting the system information; whether a cell where the terminal is located supports broadcasting the system information; a first valid area of the system information; a valid version number of the system information; whether the system information is sent in a broadcast manner; a broadcast period of the system information; or whether the system information is encrypted.

In an embodiment, the configuration information of the multicast broadcast service control channel is associated with at least one of: a multicast broadcast service identity; a second valid area; or a valid duration.

In an embodiment, the second valid area includes at least one of: a cell; a radio access network notification area; a tracking area; or a registration area.

In an embodiment, the configuration information of the multicast broadcast service control channel includes at least one of:
a common frequency domain resource of the multicast broadcast service control channel;
a repetition period and an offset of the multicast broadcast service control channel;
a window start slot of the multicast broadcast service control channel;
a window duration of the multicast broadcast service control channel; or
a modification period of the multicast broadcast service control channel.

In an embodiment, the apparatus also includes: a receiving module, configured to receive capability indication information sent by the terminal; in which the capability indication information indicates whether the terminal supports determining the configuration information of the multicast broadcast service control channel according to the broadcast message, and/or the capability indication information indicates whether the terminal supports determining the configuration information of the multicast broadcast service control channel according to the dedicated signaling.

As for the apparatus embodiments, since they basically correspond to the method embodiments, for the relevant parts reference may be made to the partial descriptions of the method embodiments. The apparatus embodiments described above are merely illustrative, in which the modules described as separate components may or may not be physically separated, and the components displayed as modules may or may not be physical modules, that is, they may be located in one place or distributed over multiple network modules. Some or all of the modules may be selected according to actual needs to achieve the purpose of the solutions in the embodiments. A person skilled in the art can understand and implement without any creative work.

The embodiments of the present disclosure also propose a system for determining configuration information. The system includes a terminal and a network device, in which the terminal is configured to implement the method for receiving configuration information described in any of the above embodiments, and the network device is configured to implement the method for sending configuration information described in any of the above embodiments.

The embodiments of the present disclosure also propose a communication apparatus, including: a processor; and a memory for storing a computer program. When the computer program is executed by the processor, the method for receiving configuration information described in any of the above embodiments is implemented.

The embodiments of the present disclosure also propose a communication apparatus, including: a processor; and a memory for storing a computer program. When the computer program is executed by the processor, the method for sending configuration information described in any of the above embodiments is implemented.

The embodiments of the present disclosure also propose a computer-readable storage medium for storing a computer program. When the computer program is executed by a processor, the method for receiving configuration information described in any of the above embodiments is implemented.

The embodiments of the present disclosure also propose a computer-readable storage medium for storing a computer program. When the computer program is executed by a processor, the method for sending configuration information described in any of the above embodiments is implemented.

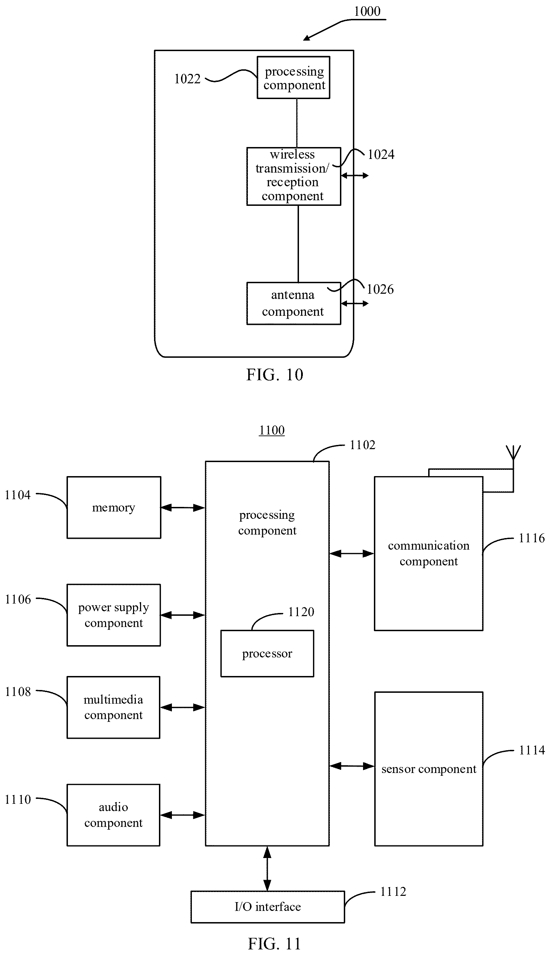

As shown in FIG. 10, FIG. 10 is a schematic block diagram of an apparatus 1000 for sending configuration information according to an embodiment of the present disclosure. The apparatus 1000 may be a base station. Referring to FIG. 10, the apparatus 1000 includes a processing component 1022, a wireless transmission/reception component 1024, an antenna component 1026, and a signal processing portion specific to a wireless interface. The processing component 1022 may further include one or more processors. One of the processors in the processing component 1022 may be configured to implement the method for sending configuration information described in any of the above embodiments.

FIG. 11 is a schematic block diagram of an apparatus 1100 for receiving configuration information according to an embodiment of the present disclosure. For example, the apparatus 1100 may be a terminal, such as a mobile phone, a computer, a digital broadcast terminal, a messaging device, a game console, a tablet device, a medical device, a fitness device, a personal digital assistant, etc.

Referring to FIG. 11, the apparatus 1100 may include one or more of: a processing component 1102, a memory 1104, a power supply component 1106, a multimedia component 1108, an audio component 1110, an input/output (I/O) interface 1112, a sensor component 1114, and a communication component 1116.

The processing component 1102 generally controls the overall operation of the apparatus 1100, such as operations associated with display, phone calls, data communications, camera operations, and recording operations. The processing component 1102 may include one or more processors 1120 to execute instructions to implement all or part of the steps of the method for sending configuration information described in any of the above embodiments. In addition, the processing component 1102 may include one or more modules to facilitate an interaction between the processing component 1102 and other components. For example, the processing component 1102 may include a multimedia module to facilitate an interaction between the multimedia component 1108 and the processing component 1102.

The memory 1104 is configured to store various types of data to support operations in the apparatus 1100. Examples of such data include instructions for any application or method operating on the apparatus 1100, contact data, phonebook data, messages, pictures, videos, and the like.

The power supply component 1106 provides power to various components of the apparatus 1100. The power supply component 1106 may include a power management system, one or more power supplies, and other components associated with generating, managing, and distributing power for the apparatus 1100.

The multimedia component 1108 includes a screen that provides an output interface between the apparatus 1100 and the user. In some embodiments, the screen may include a liquid crystal display (LCD) and a touch panel (TP). If the screen includes a touch panel, the screen may be implemented as a touch screen to receive an input signal from a user.

The audio component 1110 is configured to output and/or input audio signals. For example, the audio component 1110 includes a microphone (MIC) configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 also includes a speaker for outputting audio signals.

The I/O interface 1112 provides an interface between the processing component 1102 and a peripheral interface module, which may be a keyboard, a click wheel, a button, or the like. These buttons may include, but are not limited to: a home button, a volume button, a start button, and a lock button.

The sensor component 1114 includes one or more sensors for providing state assessment of various aspects for the apparatus 1100.

The communication component 1116 is configured to facilitate wired or wireless communication between the apparatus 1100 and other devices. The apparatus 1100 may access a wireless network based on a communication standard, such as Wi-Fi, 2G, 3G, 4G LTE, 5G NR, or a combination thereof. In an example embodiment, the communication component 1116 receives a broadcast signal or broadcast-related information from an external broadcast management system via a broadcast channel. In an example embodiment, the communication component 1116 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an example embodiment, the apparatus 1100 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to execute the method for sending configuration information described in any of the above embodiments.

In an example embodiment, a non-temporary computer-readable storage medium including instructions is also provided, such as a memory 1104 including instructions. The above instructions may be executed by the processor 1120 of the apparatus 1100 to complete the method for sending configuration information described in any of the above embodiments. For example, the non-transitory computer-readable storage medium may be a ROM, a random access memory (RAM), a CD-ROM, a magnetic tape, a floppy disk, an optical data storage device, and the like.

Other embodiments of the present disclosure will be apparent to those skilled in the art from consideration of the specification and practice of the present disclosure. The present disclosure is intended to cover any modifications, uses or adaptations of the present disclosure, which follow the general principles of the present disclosure and include common knowledge or customary technical means in the technical field not disclosed in the present disclosure. It is intended that the specification and examples be considered as exemplary only, with a true scope and spirit of the disclosure being indicated by the following claims.

It should be understood that the present disclosure is not limited to the exact construction that has been described above and shown in the drawings, and that various modifications and changes may be made without departing from the scope thereof. The scope of the present disclosure is limited only by the accompanying claims.

## Claims

1. A method for receiving configuration information, performed by a terminal, comprising:
determining configuration information of a multicast broadcast service control channel according to a broadcast message and/or a dedicated signaling sent by a network device, wherein the multicast broadcast service control channel is used to transmit a multicast broadcast service configuration.

2. The method according to claim 1, wherein the broadcast message comprises at least one of:
a paging message; or
system information.

3. The method according to claim 2, wherein the system information comprises at least one of:
an existing system information block; or
a new system information block.

4. The method according to claim 3, wherein the new system information block is an on-demand system information block.

5. The method according to any one of claims 2 to 4, wherein configuration information of the system information is carried in at least one of:
a system information block; or
a dedicated signaling.

6. The method according to any one of claims 2 to 5, further comprising:
decrypting the system information according to a key, wherein the system information is encrypted by the key.

7. The method according to claim 6, further comprising:
determining the key according to a non-access stratum message and/or a dedicated signaling.

8. The method according to any one of claims 2 to 7, wherein the configuration information of the system information comprises at least one of:
a resource configuration for receiving the system information;
configuration information of a random access channel for requesting the system information;
whether a cell where the terminal is located supports broadcasting the system information;
a first valid area of the system information;
a valid version number of the system information;
whether the system information is sent in a broadcast manner;
a broadcast period of the system information; or
whether the system information is encrypted.

9. The method according to any one of claims 1 to 8, wherein the configuration information of the multicast broadcast service control channel is associated with at least one of:
a multicast broadcast service identity;
a second valid area; or
a valid duration.

10. The method according to claim 9, wherein the second valid area comprises at least one of:
a cell;
a radio access network notification area;
a tracking area; or
a registration area.

11. The method according to any one of claims 1 to 10, wherein the configuration information of the multicast broadcast service control channel comprises at least one of:
a common frequency domain resource of the multicast broadcast service control channel;
a repetition period and an offset of the multicast broadcast service control channel;
a window start slot of the multicast broadcast service control channel;
a window duration of the multicast broadcast service control channel; or
a modification period of the multicast broadcast service control channel.

12. The method according to any one of claims 1 to 11, wherein the terminal is a terminal that joins a multicast service session and is configured to be able to receive a multicast service in a non-connected state.

13. The method according to any one of claims 1 to 12, further comprising:
sending capability indication information to the network device;
wherein the capability indication information indicates whether the terminal supports determining the configuration information of the multicast broadcast service control channel according to the broadcast message, and/or the capability indication information indicates whether the terminal supports determining the configuration information of the multicast broadcast service control channel according to the dedicated signaling.

14. A method for sending configuration information, performed by a network device, comprising:
sending a broadcast message and/or a dedicated signaling, wherein the broadcast message and/or the dedicated signaling is used to determine configuration information of a multicast broadcast service control channel, and the multicast broadcast service control channel is used to transmit a multicast broadcast service configuration.

15. The method according to claim 14, wherein the broadcast message comprises at least one of:
a paging message; or
system information.

16. The method according to claim 15, wherein the system information comprises at least one of:
an existing system information block; or
a new system information block.

17. The method according to claim 16, wherein the new system information block comprises an on-demand system information block.

18. The method according to any one of claims 14 to 17, wherein configuration information of the system information is carried in at least one of:
a system information block; or
a dedicated signaling.

19. The method according to any one of claims 14 to 18, further comprising:
encrypting the system information according to a key.

20. The method according to claim 19, further comprising:
sending a non-access stratum message and/or a dedicated signaling to a terminal, wherein the non-access stratum message and/or the dedicated signaling indicates the key.

21. The method according to any one of claims 14 to 20, wherein the configuration information of the system information comprises at least one of:
a resource configuration for receiving the system information;
configuration information of a random access channel for requesting the system information;
whether a cell where the terminal is located supports broadcasting the system information;
a first valid area of the system information;
a valid version number of the system information;
whether the system information is sent in a broadcast manner;
a broadcast period of the system information; or
whether the system information is encrypted.

22. The method according to any one of claims 13 to 21, wherein the configuration information of the multicast broadcast service control channel is associated with at least one of:
a multicast broadcast service identity;
a second valid area; or
a valid duration.

23. The method according to claim 22, wherein the second valid area comprises at least one of:
a cell;
a radio access network notification area;
a tracking area; or
a registration area.

24. The method according to any one of claims 13 to 23, wherein the configuration information of the multicast broadcast service control channel comprises at least one of:
a common frequency domain resource of the multicast broadcast service control channel;
a repetition period and an offset of the multicast broadcast service control channel;
a window start slot of the multicast broadcast service control channel;
a window duration of the multicast broadcast service control channel; or
a modification period of the multicast broadcast service control channel.

25. The method according to any one of claims 13 to 24, further comprising:
receiving capability indication information sent by the terminal;
wherein the capability indication information indicates whether the terminal supports determining the configuration information of the multicast broadcast service control channel according to the broadcast message, and/or the capability indication information indicates whether the terminal supports determining the configuration information of the multicast broadcast service control channel according to the dedicated signaling.

26. An apparatus for receiving configuration information, comprising:
a processing module, configured to determine configuration information of a multicast broadcast service control channel according to a broadcast message and/or a dedicated signaling sent by a network device, wherein the multicast broadcast service control channel is used to transmit a multicast broadcast service configuration.

27. An apparatus for sending configuration information, comprising:
a sending module, configured to send a broadcast message and/or a dedicated signaling, wherein the broadcast message and/or the dedicated signaling is used to determine configuration information of a multicast broadcast service control channel, and the multicast broadcast service control channel is used to transmit a multicast broadcast service configuration.

28. A system for determining configuration information, comprising a terminal and a network device, wherein the terminal is configured to implement the method for receiving configuration information according to any one of claims 1 to 13, and the network device is configured to implement the method for sending configuration information according to any one of claims 14 to 25.

29. A communication apparatus, comprising:
a processor;
a memory for storing a computer program;
wherein when the computer program is executed by the processor, the method for receiving configuration information according to any one of claims 1 to 13 is implemented.

30. A communication apparatus, comprising:
a processor;
a memory for storing a computer program;
wherein when the computer program is executed by the processor, the method for sending configuration information according to any one of claims 14 to 25 is implemented.

31. A computer-readable storage medium for storing a computer program, wherein when the computer program is executed by a processor, the method for receiving configuration information according to any one of claims 1 to 13 is implemented.

32. A computer-readable storage medium for storing a computer program, wherein when the computer program is executed by a processor, the method for sending configuration information according to any one of claims 14 to 25 is implemented.
